# EUROPEAN PATENT SPECIFICATION

(11) **EP 2 990 216 B1**
(45) Date of publication and mention of the grant of the patent: **28.07.2021**
(21) Application number: 15163630.5
(22) Date of filing: 07.11.2006
(51) Int. Cl.: B60B 27/00, F16C 19/18

(54) **BEARING DEVICE FOR WHEEL**
LAGERVORRICHTUNG FÜR RAD
DISPOSITIF DE PALIER POUR ROUE

(30) Priority: 07.11.2005 JP 2005322321; 10.11.2005 JP 2005326329
(43) Date of publication of application: 02.03.2016
(62) Divisional of application: 06823086.1
(73) Proprietor: NTN Corporation, Osaka-shi, Osaka 550-0003 (JP)
(72) Inventor: Komori, Kazuo, Iwata, Shizuoka 438-8510 (JP)
(74) Representative: Cohausz & Florack

(56) References cited:
- EP-A2- 1 500 524
- JP-A- 2004 108 449
- JP-A- 2004 314 820
- JP-A- 2005 291 457
- US-A1- 2005 111 771
- None

## Description

### BACKGROUND OF THE INVENTION

### Field of the Invention

The present invention relates to a bearing apparatus for freely rotatably supporting a wheel of vehicle, and more particularly to a bearing apparatus for a wheel of vehicle intended to reduce the weight and to increase the rigidity of the wheel bearing apparatus.

### Description of Background Art

In usual, the bearing apparatus for a wheel of vehicle is adapted to freely rotatably support a hub wheel for mounting the wheel via a rolling bearing and it is adopted an inner ring rotation type for a driving wheel and both inner ring rotation and outer ring rotation types for a driven wheel. Double row angular ball bearings are widely used in such a bearing apparatus from reasons that it has a desirable bearing rigidity, high durability against misalignment, and small rotation torque required for fuel consumption. On the contrary double row tapered roller bearings are widely used for off-road vehicles, trucks and heavy duty vehicles.

The bearing apparatus for a wheel of vehicle is broadly classified to a structure of first generation in which a wheel bearing of double row angular contact ball bearing is fitted between a knuckle forming part of a suspension and a hub wheel, a structure of second generation in which a body mounting flange or a wheel mounting flange is directly formed on the outer circumferential surface of an outer member, a structure of third generation in which one of the inner raceway surfaces is directly formed on the outer circumferential surface of the hub wheel, and a structure of fourth generation in which the inner raceway surfaces are directly formed on the outer circumferential surfaces of the hub wheel and the constant velocity universal joint.

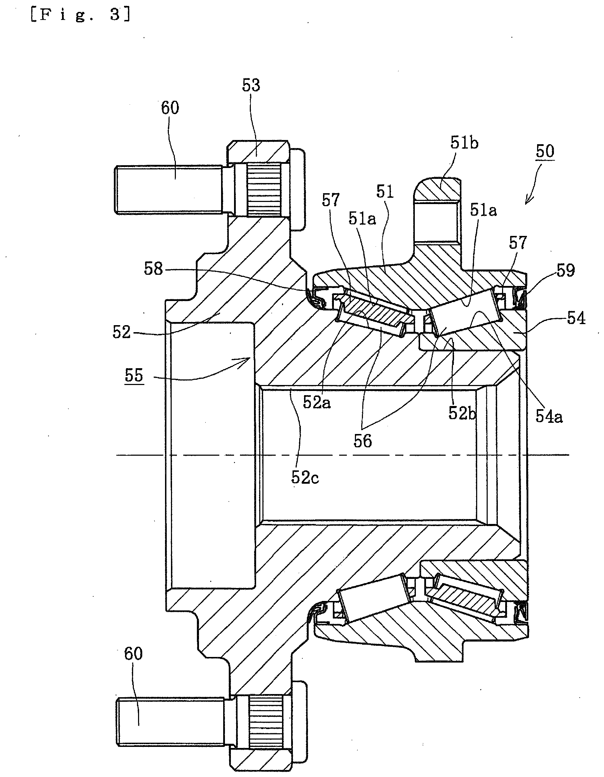

One example of the wheel bearing apparatus of the prior art is shown in Fig. 3. The bearing apparatus for a wheel of vehicle 50 is formed by a double row tapered roller bearing comprising an outer member 51 integrally formed on its outer circumferential surface with a body mounting flange 51b to be mounted on a knuckle (not shown) of a vehicle and on its inner circumferential surface with double row outer raceway surfaces 51a, 51a; an inner member integrally formed on its outer circumferential surface with double row inner raceway surfaces 52a, 54a oppositely to the double row outer raceway surfaces 51a, 51a; double row tapered rollers 56, 56 freely rollably contained between the outer raceway surfaces 51a, 51a and inner raceway surfaces 52a, 54a: and cages 57, 57 for freely rollably holding the double row tapered rollers 56, 56.

The inner member 55 comprises a hub wheel 52 having a wheel mounting flange 53 formed integrally therewith at one end thereof, one inner raceway surface 52a formed on the outer circumferential surface thereof, and a cylindrical portion 52b axially extending from the inner raceway surface 52a, and comprises an inner ring 54 press fitted on the cylindrical portion 52b and formed on its outer circumferential surface with the other inner raceway surface 54a. Thus the inner member 55 forms the wheel bearing apparatus of the third generation structure for driving a driving wheel.

In addition hub bolts 60 are adapted to be mounted on the wheel mounting flange 53 equidistantly along its outer periphery. Furthermore seals 58, 59 are mounted in annular openings formed between the outer member 51 and the inner member 55 to prevent leakage of grease contained within the bearing apparatus and entering of rain water or dusts into the bearing apparatus from the outside.

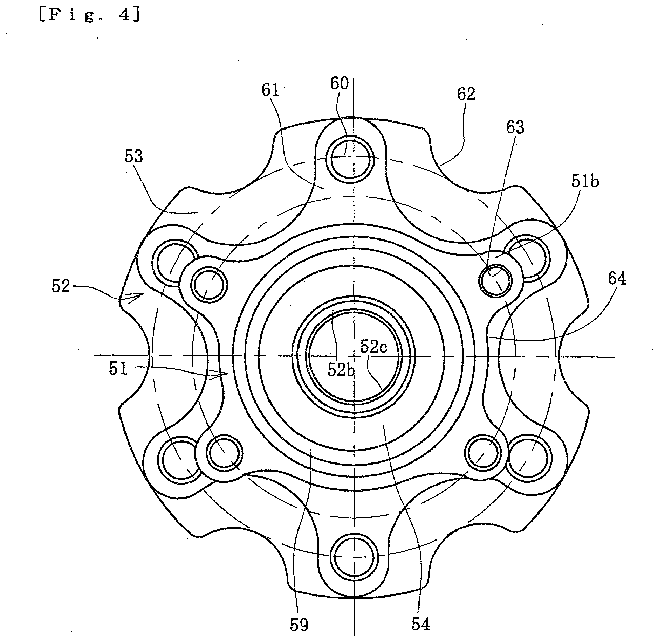

In such a wheel bearing apparatus radially extending ribs 61 are formed on a surface of the inner side of the wheel mounting flange 53 at positions of the hub bolts 60 as shown in Fig. 4 for increasing the rigidity of the wheel bearing apparatus as well as recesses 62 each having a substantially circular arc are formed on the outermost periphery of the wheel mounting flange 53 between the hub bolts 60 for reducing the weight of the wheel bearing apparatus. On the other hand the body mounting flange 51b of the outer member 51 is formed with apertures 63 for bolts fastened to a knuckle (not shown) and also formed with recesses 64 each having a smoothly curved configuration on its outermost periphery between the bolt apertures 64. Each recess 64 is formed radially inward beyond the pitch circular diameter of the bolt apertures 63 in order to remove excessive material of the body mounting flange 51b (see Japanese Laid-open Patent Publication No. 65049/2000). Also known from the prior art is document JP 2004 108 449 A, which discloses a rolling bearing device.

### SUMMARY OF THE INVENTION

In such a wheel bearing apparatus 50 of the prior art it has been desired to increase the rigidity of bearing apparatus in order to have sufficient strength and durability and thus to maintain stable driving although a large moment load is applied to the bearing apparatus. However since the space around a suspension is limited and thus the size of the bearing apparatus is also limited, it is very difficult to increase the rigidity of the bearing apparatus. In such a case if additionally trying to reduce the weight of the bearing apparatus, the difficulty to achieve both the increase of rigidity and the reduction of weight of the bearing apparatus becomes extremely increased. This is applied not only to the hub wheel 52 required to have the strength and durability but to the outer member 51 required to be fitted within an inner diameter of a knuckle of vehicle.

It is, therefore, an object of the present invention to provide a bearing apparatus for a wheel of vehicle which can solve the antinomic problems of reducing the weight and of increasing the rigidity of the bearing apparatus.

### Means for solving the problems

For achieving the object of the present invention, there is provided a bearing apparatus for a wheel of vehicle comprising: an outer member formed on its inner circumferential surface with double row outer raceway surfaces; an inner member including a hub wheel having a wheel mounting flange formed integrally therewith at one end thereof, hub bolts being adapted to be mounted on the wheel mounting flange equidistantly along its outer periphery, one inner raceway surface formed on the outer circumferential surface thereof oppositely to one of the double row outer raceway surfaces and a cylindrical portion axially extending from the inner raceway surface, and including an inner ring press fitted on the cylindrical portion and formed on its outer circumferential surface with the other inner raceway surface opposite to the other raceway surface of the double row outer raceway surfaces; and double row groups of balls freely rollably contained between the outer raceway surfaces and inner raceway surfaces respectively of the outer member and the inner members wherein a pitch circle diameter of the ball group of the outer side is larger than a pitch circle diameter of the ball group of the inner side, characterized in that ribs are formed on a surface of the inner side of the wheel mounting flange, each rib being formed by an outline including straight portions radially extending from the base of the wheel mounting flange and a rounded tip portion having a predetermined radius of curvature centered on the axial center of hub bolt and substantially corresponding to a distance between the axial center and the outermost periphery of the wheel mounting flange, that a substantially conical recess is formed in an outer side end portion of the hub wheel, and that a substantially constant wall thickness is formed between the conical recess and the outer circumferential surface of the hub wheel of the outer side end portion thereof (claim 1).

According to the present invention of claim 1, in the wheel bearing apparatus of the first through fourth generations, since that ribs are formed on a surface of the inner side of the wheel mounting flange, each rib being formed by an outline including straight portions radially extending from the base of the wheel mounting flange and a rounded tip portion having a predetermined radius of curvature centered on the axial center of hub bolt and substantially corresponding to a distance between the axial center and the outermost periphery of the wheel mounting flange, it is possible to provide a bearing apparatus for a wheel of vehicle which can solve the antinomic problems of reducing the weight and of increasing the rigidity of the bearing apparatus.

It is preferable that the radius of curvature "r" of the rounded tip portion is set so that it is larger than a distance "a" between the axial center of hub bolt and the straight portion and smaller than a distance "b" between the axial center of hub bolt and a point of intersection of the outermost periphery of the wheel mounting flange and a line extended radially outward from the straight portion, and accordingly has a relation (a≤r < b) (claim 2).

Further there is provided a bearing apparatus for a wheel of vehicle comprising: an outer member formed on its outer circumferential surface with a body mounting flange adapted to be mounted on a knuckle of automobile and also formed on its inner circumferential surface with double row outer raceway surfaces; an inner member formed on its outer circumferential surface with double row inner raceway surfaces respectively opposite to the other raceway surface; and double row groups of balls freely rollably contained between the outer raceway surfaces and inner raceway surfaces respectively of the outer member and the inner members; the body mounting flange being formed with four apertures for bolts fastened to a knuckle and also formed with recesses each having a smoothly curved configuration on its outermost periphery between the bolt apertures characterized in that a pitch circle diameter of the ball group of the outer side is larger than a pitch circle diameter of the ball group of the inner side, and that the pitch "Y" of bolt apertures in a loading direction is larger than the pitch "X" of bolt apertures in a direction orthogonal to the loading direction (i.e. X≤Y).

As defined above, in a bearing apparatus for a wheel of vehicle in which an outer member formed on its outer circumferential surface with a body mounting flange adapted to be mounted on a knuckle of automobile is provided and the body mounting flange is formed with four apertures for bolts fastened to a knuckle, since the pitch circle diameter of the ball group of the outer side is larger than the pitch circle diameter of the ball group of the inner side, and since the pitch "Y" of bolt apertures in a loading direction is larger than the pitch "X" of bolt apertures in a direction orthogonal to the loading direction (i.e. X≤Y), it is possible to provide a bearing apparatus for a wheel of vehicle which can solve the antinomic problems of reducing the weight and of increasing the rigidity of the bearing apparatus.

It is preferable that the outer diameter of each ball is same in the ball groups, and the number of balls of the outer side ball group is set larger than that of balls of the inner side ball group (claim 3). This enables to satisfy both the increase of rigidity and extension of bearing life.

It is preferable that the ratio "d/PCDi" of the outer diameter "d" of each ball to the pitch circle diameter "PCDi" of a ball group of the inner side is set as having a range 0.14≤(d/PCDi)≤0.25 (claim 4). This enables to satisfy both the increase of rigidity and extension of bearing life.

It is also disclosed that the inner member including a hub wheel having a wheel mounting flange formed integrally therewith at one end thereof, one inner raceway surface formed on the outer circumferential surface thereof oppositely to one of the double row outer raceway surfaces and a cylindrical portion axially extending from the inner raceway surface, and including an inner ring press fitted on the cylindrical portion and formed on its outer circumferential surface with the other inner raceway surface opposite to the other raceway surface of the double row outer raceway surfaces; and wherein a substantially conical recess is formed in an outer side end portion of the hub wheel, and the depth of the recess extends so that a substantially constant wall thickness is formed between the conical recess and the outer circumferential surface of the hub wheel of the outer side end portion thereof. This makes it possible to provide a bearing apparatus for a wheel of vehicle which can solve the antinomic problems of reducing the weight and of increasing the rigidity of the bearing apparatus.

### Effects of the invention

### Best mode for carrying out the Disclosure

The best mode for carrying out the present invention is a bearing apparatus for a wheel of vehicle comprising the features of claim 1.

### DESCRIPTION OF THE PREFERRED EMBODIMENTS

### Embodiment

A preferable embodiment of the present invention will be hereinafter described with reference to the drawings.

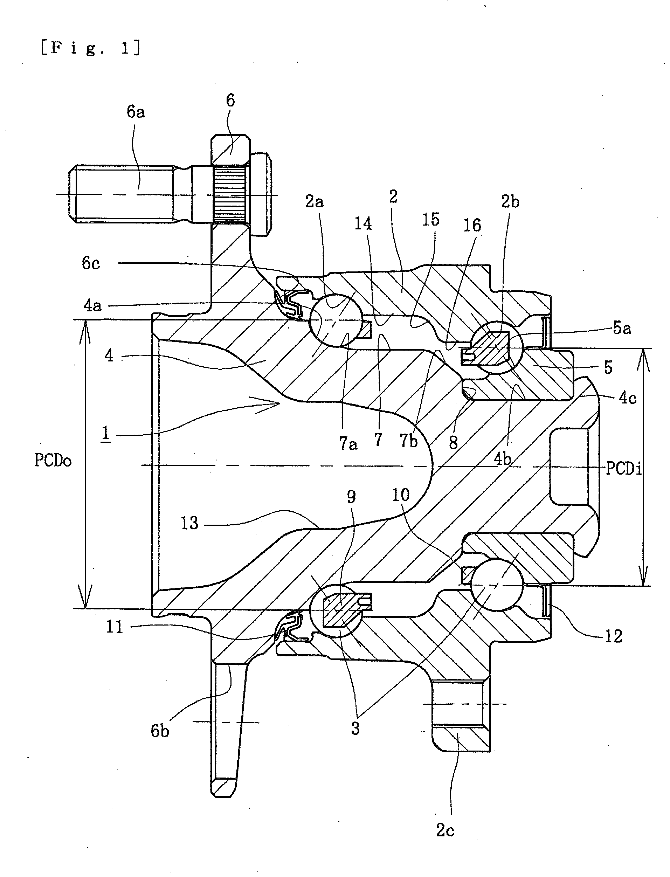

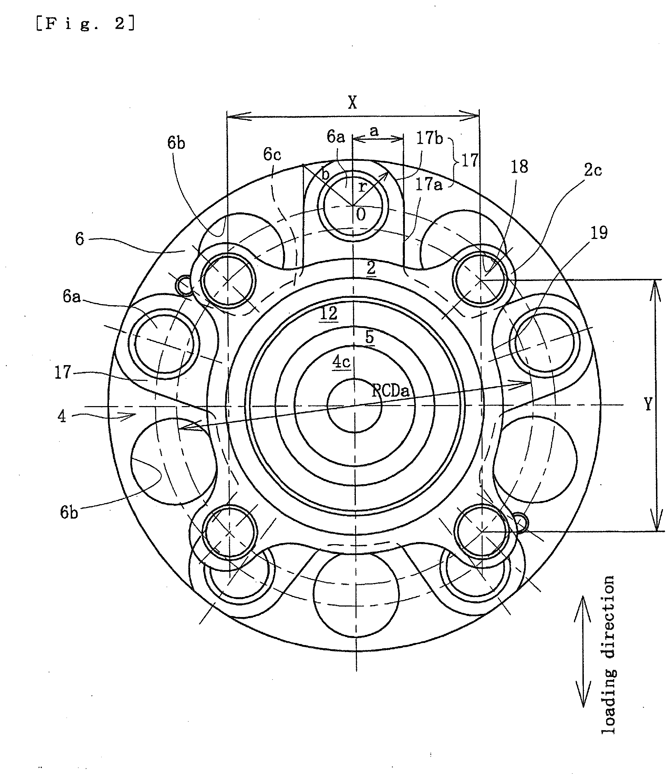

Fig. 1 is a longitudinal section view showing one embodiment of the bearing apparatus for a wheel of vehicle of the present invention, Fig. 2 is a side elevation view of Fig. 1. In the description below, a term "outer side" (left hand side in the drawings) of the apparatus denotes a side which is positioned outside of the vehicle body and a term "inner side" (right hand side in the drawings) of the apparatus denotes a side which is positioned inside of the body when the bearing apparatus is mounted on the vehicle body.

The bearing apparatus for a wheel of vehicle of the present invention shown in Fig. 1 is a third generation type used for a driven wheel and comprises an inner member 1, an outer member 2, and double rows of balls (ball groups) 3, 3 for rollably contained between the inner and outer members 1, 2. The inner member 1 comprises the hub wheel 4 and an inner ring 5 press fitted on the hub wheel with a predetermined interference. The hub wheel 4 is integrally formed with a wheel mounting flange 6 at its one end, one (outer side) inner raceway surface 4a on the outer circumferential surface, and a cylindrical portion 4b extending from the inner raceway surface 4a through a shaft shaped portion 7. Hub bolts 6a are arranged on the wheel mounting flange 6 equidistantly along the periphery of the wheel mounting flange 6 and circular apertures 6b are formed between the hub bolts 6a. These circular apertures 6b contribute not only to reduction of the weight of the bearing apparatus but to passage of any fastening tool used for assembly and disassembly of the bearing apparatus.

The inner ring 5 is formed on its outer circumferential surface with the other (inner side) inner raceway surface 5a and adapted to be press fitted on the cylindrical portion 4b of the hub wheel 4 with a predetermined interference and to be axially secured by a caulked portion 4c formed by plastically deforming the end of the cylindrical portion 4b. The inner ring 5 is made of high carbon chrome bearing steel such as SUJ 2 and hardened to their core by dipping quenching as having hardness of 58 ∼ 64 HRC.

The hub wheel 4 is made of medium carbon steel including carbon of 0.40 ∼ 0.80%by weight such as S53C and hardened by high frequency induction quenching so that a region including the inner raceway surface 4a from the inner side base 6c of the wheel mounting flange 6 to the cylindrical portion 4b has surface hardness of 58 ∼ 64 HRC. The caulked portion 4c is remained as its surface hardness after forging. Accordingly the wheel mounting flange 6 has a sufficient mechanical strength against the rotary bending load applied thereto and the anti-fretting strength of the cylindrical portion 4b at a region press fitted by the inner ring 5 can be improved and the plastically deforming working of the caulked portion 4c can be also carried out without any micro crack during caulking process.

The outer member 2 is integrally formed on its outer circumferential surface with a body mounting flange 2c to be mounted on a knuckle (not shown) of a vehicle and on its inner circumferential surface with an outer side outer raceway surface 2a opposite to the inner raceway surface 4a of the hub wheel 4 and an inner side outer raceway surface 2b opposite to the inner raceway surface 5a of the inner ring 5. Double rows of balls 3, 3 are contained between these outer and inner raceway surfaces and rollably held by cages 9, 10. The outer member 2 is made of medium carbon steel including carbon of 0.40 ∼ 0.80%by weight such as S53C and the double row outer raceway surfaces 2a, 2b are hardened by high frequency induction quenching so as to have a surface hardness of 58 ∼ 64 HRC.

A seal 11 is mounted within an outer side end portion of an annular space formed between the outer member 2 and the inner member 1 and a magnetic encoder 12 is mounted within an inner side end of the annular space for detecting the rotational speed of wheel. The seal 11 and a cap (not shown) covering the opened end of the outer member 2 prevent leakage of grease contained in the bearing and entering of rain water and dusts into the bearing from outside. Although the structure shown here is that of third generation bearing, the bearing apparatus of the present invention can be applied to the structures of bearing of the second and fourth generation if the bearing apparatus is an inner ring rotation type in which the body mounting flange 2c is integrally formed on the outer circumferential surface of the outer member 2. In addition although the illustrated bearing apparatus uses the double row angular ball bearing, it is possible to use other bearing e.g. a double row tapered roller bearing using tapered rollers as the rolling elements.

As shown in Fig. 1 a pitch circle diameter PCDo of the outer side ball group 3 is set larger than a pitch circle diameter PCDi of the inner side ball group 3 (PCDo > PCDi). The diameter "d" of each ball 3 is same both in the outer and inner sides and thus the number of the ball group 3 in the outer side is larger than that of the ball group 3 in the inner side due of the fact PCDo > PCDi.

The outer outline configuration of the hub wheel 4 continues from the bottom of the inner raceway surface 4a to the cylindrical portion 4b via the counter portion 7a, the shaft shaped portion 7 axially extending from the counter portion 7a, a taper shaped stepped portion 7b, and the shoulder 8 to which the inner ring 5 is abutted. A substantially conical recess 13 is formed at the outer side end portion of the hub wheel 4. The depth of this recess 13 extends to near the stepped portion 7b of the shaft shaped portion 7 beyond the bottom of the inner raceway surface 4a so that the wall thickness of the hub wheel 4 at the outer side i.e. the wall thickness between the conical recess 13 and the outer circumferential surface of the hub wheel 4 at the outer side, is substantially constant. In addition due to the fact PCDo > PCDi, the diameter of the inner raceway surface 4a is larger than the inner raceway surface 5a of the inner ring 5 and thus the outer diameter of the shaft shaped portion 7 is larger than the diameter of the bottom of the inner raceway surface 5a.

On the other hand, in the outer member 2, due to the fact PCDo>PCDi, the diameter of the outer side outer raceway surface 2a is larger than that of the inner side outer raceway surface 2b. The outer side outer raceway surface 2a continues to the inner side outer raceway surface 2b via a cylindrical shoulder 14, a stepped portion 15 and a cylindrical shoulder portion 16 of a smaller diameter. The inner diameter of the bottom of the outer raceway surface 2b is set so that it has substantially same diameter as the inner diameter of the shoulder 14 of a larger diameter.

In the bearing apparatus for a wheel of vehicle having such a structure, since the pitch circle diameter PCDo of the outer side ball group 3 is larger than the pitch circle diameter PCDi of the inner side ball group 3 and the number of the outer side ball group 3 is also larger than that of the inner side ball group 3, the bearing rigidity of the bearing apparatus at the outer side can be increased and thus the life of the bearing apparatus can be extended. In addition since the recess 13 is formed at the outer side end portion of the hub wheel 4 so that the wall thickness of the hub wheel 4 at the outer side end portion is substantially constant, it is possible to substantially reduce the weight of the bearing apparatus. Accordingly this enables to solve the antinomic problems of reducing the weight of the bearing apparatus and of increasing the rigidity of the bearing apparatus.

In addition according to the preferable embodiment of the present invention, a ratio of the diameter "d" of each ball 3 to the pitch circle diameter PCDi of the inner side ball group 3 (d/PCDi) is set in a predetermined range i.e. 0.14≤(d/PCDi)≤0.25 in order to increase of the bearing rigidity at the outer side, In view of the bearing rigidity a smaller diameter "d" of each ball 3 is preferable since a larger number of balls 3 (i.e. a smaller diameter "d") can increase the bearing rigidity in a same pitch circle diameter PCDi. However in view of the life of the bearing apparatus a larger diameter "d" of ball 3 is preferable since the larger diameter "d" of ball 3 reduces the rolling fatigue strength.

As a result of the FEM analysis (analysis using an electrolytic electron microscope) of a relation between the pitch circle diameter PCDi and the diameter "d" of ball 3, it has been found that the bearing rigidity cannot be increased when d/PCDi exceeds 0.25, and on the contrary the rolling fatigue strength is lowered when d/PCDi is less than 0.14. Accordingly it is possible to satisfy both the increase of the rigidity and extension of the bearing life by setting the ratio d/PCDi in the range 0.14≤(d/PCDi)≤0.25 in addition to setting the pitch circle diameter PCDo of the outer side ball group 3 larger than the pitch circle diameter PCDi of the inner side ball group 3.

In addition according to a preferable embodiment, ribs 17 are formed on the wheel mounting flange 6 of the hub wheel 4 in order to increase the rigidity of the bearing apparatus and circular apertures 6b are also formed in the wheel mounting flange 6 in order to reduce the weight of the bearing apparatus as shown in Fig. 2. Each rib 17 is formed on the inner side surface of the wheel mounting flange 6 at a position in which the hub bolt 6a is press fitted as having a configuration radially extending outward from the base 6c of the wheel mounting flange 6. Each rib 17 is formed by an outline comprising straight portions 17a radially extending outward from the base of the wheel mounting flange 6 and a rounded tip portion 17b. The provision of the ribs 17 increase the strength and thus rigidity of the wheel mounting flange 6 and thus enables to form the circular apertures 6b as having a larger diameter to further reduce the weight of the bearing apparatus.

The rounded tip portion 17b is formed as having a circular arc of a radius of curvature "r" centered on the axial center "O" of hub bolt 6a. The radius of curvature "r" substantially corresponds to a distance between the axial center "O" of the hub bolt 6a and the outermost periphery of the wheel mounting flange 6. That is, the radius of curvature "r" of the rounded tip portion 17b is set so that it is larger than a distance "a" between the axial center "O" of hub bolt 6a and the straight portion 17a and smaller than a distance "b" between the axial center "O" of hub bolt 6a and a point of intersection of the outermost periphery of the wheel mounting flange 6 and a line extended radially outward from the straight portion 17a (i.e. a≤r < b).

On the other hand the body mounting flange 2c of the outer member 2 is formed with apertures 18 for bolts to be fastened to the knuckle (not shown) of vehicle and also formed with recesses 19 each having a smoothly curved configuration on the outermost periphery of the body mounting flange 2c between the bolt apertures 18. Each recess 19 is formed as extending radially inward beyond the pitch circular diameter of the bolt apertures 18 in order to remove excessive material of the body mounting flange 2c. This contributes to further reduce the weight of the wheel bearing apparatus.

The present applicant has noted arrangement of the bolt apertures 18 of the body mounting flange 2c in a four-aperture type in order to increase the rigidity of the outer member 2. In this case it is preferable to set the pitch of the bolt apertures 18 so that the pitch "Y" of bolt apertures 18 in a loading direction is larger than the pitch "X" of bolt apertures 18 in a direction orthogonal to the loading direction and more preferably "X" equals to "Y" (i.e. X≤Y). This enables to increase the rigidity of the outer member 2 although when the design of the knuckle is changed.

According to the FEM analysis carried out by the present applicant it is found that 33 ∼ 37% increase of the rigidity of the outer member 2 alone is observed in the outer member 2 of the present invention having specifications X=Y=70 ∼ 80 mm and X/Y = 1.0 as compared with a conventional outer member having specifications X = 80 ∼ 90 mm and X/Y = 1.6 ∼ 1.8. It is also found that 16-18% increase of the rigidity is additionary achieved not only in the hub wheel 4 but in the bearing unit in which the inner member 1 has been incorporated. Accordingly it is found that it is possible to provide a bearing apparatus for a wheel of vehicle which can solve the antinomic problems of reducing the weight and of increasing the rigidity of the bearing apparatus by setting the relation between the pitch "X" and "Y" of bolt apertures 18 as X≤Y.

If the pitches "X" and "Y" of the bolt apertures 18 of the outer member 2 are set equal (X=Y), the outer member 2 can be assembled to the knuckle of vehicle without considering the orientation of the body mounting flange 2c of the outer member. Thus workability of assembly can be improved.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in Industries

The bearing apparatus for a wheel of vehicle of the present invention can be applied to any of the bearing apparatus of the second ∼ fourth generations irrespective of its application for a driving wheel or a driven wheel.

### BRIEF DESCRIPTION OF THE DRAWINGS

Fig. 1 is a longitudinal section view showing one embodiment of the bearing apparatus for a wheel of vehicle of the present invention;
Fig. 2 is a side elevation view of Fig. 1;
Fig. 3 is a longitudinal section view showing a bearing apparatus for a wheel of vehicle of the prior art; and
Fig. 4 is a side elevation view of Fig. 3.

### Description of the Symbols

- 1: inner member
- 2: outer member
- 3: ball
- 4: hub wheel
- 4a, 5a: inner raceway surface
- 4b: cylindrical portion
- 4c: caulked portion
- 5: inner ring
- 6: wheel mounting flange
- 6a: hub bolt
- 6b: circular apertures
- 6c: inner side base
- 7: shaft shaped portion
- 7a: counter portion
- 7b, 15: stepped portion
- 8, 14, 16: shoulder
- 9, 10: cages
- 11: seal
- 12: magnetic encoder
- 13: recess
- 17: ribs
- 18: bolt apertures
- 19: recess
- 50: bearing apparatus for a wheel of vehicle
- 51: outer member
- 51a: outer raceway surface
- 51b: body mounting flange
- 52: hub wheel
- 52a, 54a: inner raceway surface
- 52b: cylindrical portion
- 52c: serration
- 53: wheel mounting flange
- 54: inner ring
- 55: inner member
- 56: tapered rollers
- 57: cages
- 58, 59: seals
- 60: hub bolts
- 61: ribs
- 62, 64: recesses
- 63: bolt apertures
- a: distance between the axial center of hub bolt and the straight portion
- b: distance between the axial center of hub bolt apertures and a point of intersection of the outermost periphery of the wheel mounting flange and a line extended radially outward from the straight portion
- d: outer diameter of each ball
- O: axial center of hub bolt
- PCDa: pitch circle diameter of bolt apertures of the outer member
- PCDi: pitch circle diameter of the ball group of the inner side
- PCDo: pitch circle diameter of the ball group of the outer side
- r: radius of curvature of the rounded tip portion
- X: pitch of bolt apertures in a direction orthogonal to the loading direction
- Y: pitch of bolt apertures in a loading direction

## Claims

1. A bearing apparatus for a wheel of vehicle comprising:
- an outer member (2) formed on its inner circumferential surface with double row outer raceway surfaces (2a, 2b);
- an inner member (1) including a hub wheel (4) having a wheel mounting flange (6) formed integrally therewith at one end thereof, hub bolts (6a) being adapted to be mounted on the wheel mounting flange (6) equidistantly along its outer periphery, one inner raceway surface (4a) formed on the outer circumferential surface thereof oppositely to one (2a) of the double row outer raceway surfaces (2a, 2b) and a cylindrical portion (4b) axially extending from the inner raceway surface (4a), and including an inner ring (5) press fitted on the cylindrical portion (4b) and formed on its outer circumferential surface with the other inner raceway surface (5a) opposite to the other raceway surface (2b) of the double row outer raceway surfaces (2a, 2b); and
- double row groups of balls (3) freely rollably contained between the outer raceway surfaces (2a, 2b) and inner raceway surfaces (4a, 5a) respectively of the outer member (2) and the inner members (1), wherein a pitch circle diameter (PCDo) of the ball group of the outer side is larger than a pitch circle diameter (PCDi) of the ball group of the inner side, **characterized in that**
- ribs (17) are formed on a surface of the inner side of the wheel mounting flange (6), each rib (17) being formed by an outline including straight portions (17a) radially extending outward from the base of the wheel mounting flange (6) and a rounded tip portion (17b) having a predetermined radius of curvature (r) centered on the axial center (0) of hub bolt (6a) and substantially corresponding to a distance between the axial center (0) and the outermost periphery of the wheel mounting flange (6),
- a substantially conical recess (13) is formed in an outer side end portion of the hub wheel (4), and
- a substantially constant wall thickness is formed between the conical recess (13) and the outer circumferential surface of the hub wheel (4) of the outer side end portion thereof.

2. A bearing apparatus for a wheel of vehicle of claim 1 wherein the radius of curvature (r) of the rounded tip portion (17b) is set so that it is larger than a distance (a) between the axial center (0) of hub bolt (6a) and the straight portion (17a) and smaller than a distance (b) between the axial center (0) of hub bolt (6a) and a point of intersection of the outermost periphery of the wheel mounting flange (6) and a line extended radially outward from the straight portion (17a), and accordingly has a relation (a) ≤ (r) < (b).

3. A bearing apparatus for a wheel of vehicle of claim 1 or claim 2 wherein the outer diameter (d) of each ball (3) is same in the ball groups, and the number of balls (3) of the outer side ball group is set larger than that of balls (3) of the inner side ball group.

4. A bearing apparatus for a wheel of vehicle of any one of claims 1∼3 wherein a ratio (d) / (PCDi) of the outer diameter (d) of each ball (3) to a pitch circle diameter (PCDi) of a ball group (3) of the inner side is set as having a range 0.14 ≤ (d)/(PCDi) ≤ 0.25.

## Patentansprüche

1. Lagervorrichtung für ein Rad eines Fahrzeugs, umfassend:
- ein Außenteil (2), das auf seiner Innenumfangsfläche mit zweireihigen äußeren Laufbahnflächen (2a, 2b) ausgebildet wird;
- ein Innenteil (1) einschließlich einer Radnabe (4), die einen Radmontageflansch (6) aufweist, der in einem Stück damit an einem Ende davon ausgebildet ist, Nabenbolzen (6a), die angepasst sind, um abstandsgleich entlang seines äußeren Umfangs an dem Radmontageflansch (6) befestigt zu werden, eine innere Laufbahnfläche (4a), ausgebildet auf der Außenumfangsfläche davon, gegenüberliegend zu einem (2a) von den zweireihigen äußeren Laufbahnflächen (2a, 2b), und einen zylindrischen Abschnitt (4b), der sich axial von der inneren Laufbahnfläche (4a) erstreckt, und einschließlich eines Innenrings (5), der auf den zylindrischen Abschnitt (4b) pressgepasst und auf seiner Außenumfangsfläche mit der anderen inneren Laufbahnfläche (5a) ausgebildet wird, die der anderen Laufbahnfläche (2b) der zweireihigen äußeren Laufbahnflächen (2a, 2b) gegenüber liegt; und
- zweireihige Gruppen von Kugeln (3), die frei drehbar zwischen den äußeren Laufbahnflächen (2a, 2b) und den inneren Laufbahnflächen (4a, 5a) beziehungsweise von dem Außenteil (2) und den Innenteilen (1) gehalten werden,
wobei
ein Wälzkreisdurchmesser (PCDo) der Kugelgruppe der äußeren Seite größer ist als ein Wälzkreisdurchmesser (PCDi) der Kugelgruppe der inneren Seite,
***dadurch gekennzeichnet, dass***
- Rippen (17) auf einer Oberfläche der Innenseite des Radmontageflansches (6) ausgebildet sind, wobei jede Rippe (17) durch einen Umriss ausgebildet wird, der gerade Abschnitte (17a), die sich von der Basis des Radmontageflansches (6) radial nach außen hin erstrecken, und einen abgerundeten Spitzenabschnitt (17b) enthält, der einen vorbestimmten Kurvenradius (r) mit Mittelpunkt im axialen Mittelpunkt (0) des Nabenbolzens (6a) aufweist und im Wesentlichen einem Abstand zwischen dem axialen Mittelpunkt (0) und dem äußersten Umfang des Radmontageflansches (6) entspricht,
- eine im Wesentlichen konische Vertiefung (13) in einem außenseitigen Endabschnitt der Radnabe (4) ausgebildet ist, und
- eine im Wesentlichen konstante Wanddicke zwischen der konischen Vertiefung (13) und der Außenumfangsfläche der Radnabe (4) des außenseitigen Endabschnitts davon ausgebildet ist.

2. Lagervorrichtung für ein Rad eines Fahrzeugs nach Anspruch 1, wobei der Kurvenradius (r) des abgerundeten Spitzenabschnitts (17b) so festgelegt ist, dass er größer als ein Abstand (a) zwischen dem axialen Mittelpunkt (0) des Nabenbolzens (6a) und dem geraden Abschnitt (17a) sowie kleiner als ein Abstand (b) zwischen dem axialen Mittelpunkt (0) des Nabenbolzens (6a) und einem Schnittpunkt des äußersten Umfangs des Radmontageflansches (6) mit einer Linie ist, die von dem geraden Abschnitt (17a) radial nach außen hin verlängert wird, und demgemäß eine Beziehung (a) ≤ (r) < (b) aufweist.

3. Lagervorrichtung für ein Rad eines Fahrzeugs nach Anspruch 1 oder 2, wobei der Außendurchmesser (d) jeder Kugel (3) in den Kugelgruppen gleich ist, die Anzahl der Kugeln (3) der außenseitigen Kugelgruppe aber größer als die der Kugeln (3) der innenseitigen Kugelgruppe festgelegt ist.

4. Lagervorrichtung für ein Rad eines Fahrzeugs nach einem der Ansprüche 1 bis 3, wobei ein Verhältnis (d)/(PCDi)
des Außendurchmessers (d) jeder Kugel (3) zu einem Wälzkreisdurchmesser (PCDi) einer Kugelgruppe (3) der inneren Seite so festgelegt ist, dass es in einem Bereich von 0,14 ≤ (d)/(PCDi) ≤ 0,25 liegt.

## Revendications

1. Dispositif de palier pour roue de véhicule, comprenant :
- un élément extérieur (2) pourvu, sur sa surface circonférentielle intérieure, de surfaces de chemin de roulement extérieur à deux rangées (2a, 2b) ;
- un élément intérieur (1) comportant une roue de moyeu (4) dont fait partie intégrante une bride de fixation de roue (6) au niveau d'une de ses extrémités, des boulons de moyeu (6a) conçus pour être fixés sur la bride de fixation de roue (6) à équidistance sur sa périphérie extérieure, une surface de chemin de roulement intérieur (4a) formée sur sa surface circonférentielle extérieure à l'opposé d'une surface (2a) parmi les surfaces de chemin de roulement extérieur à deux rangées (2a, 2b), et une partie cylindrique (4b) s'étendant axialement à partir de la surface de chemin de roulement intérieur (4a), et comportant une bague intérieure (5) ajustée de force sur la partie cylindrique (4b) et pourvue, sur sa surface circonférentielle extérieure, de l'autre surface de chemin de roulement intérieur (5a) à l'opposé de l'autre surface de chemin de roulement (2b) parmi les surfaces de chemin de roulement extérieur à deux rangées (2a, 2b) ; et
- des groupes à deux rangées de billes (3) confinés de manière à pouvoir rouler librement entre les surfaces de chemin de roulement extérieur (2a, 2b) et les surfaces de chemin de roulement intérieur (4a, 5a) respectivement de l'élément extérieur (2) et des éléments intérieurs (1),
dans lequel un diamètre du cercle primitif (PCDo) du groupe de billes du côté extérieur est plus grand qu'un diamètre du cercle primitif (PCDi) du groupe de billes du côté intérieur,
**caractérisé en ce que**
- des nervures (17) sont formées sur une surface du côté intérieur de la bride de fixation de roue (6), chaque nervure (17) étant formée par un contour comportant des parties droites (17a) s'étendant radialement vers l'extérieur à partir de la base de la bride de fixation de roue (6) et une partie de pointe arrondie (17b) présentant un rayon de courbure (r) prédéterminé centré sur le centre axial (0) du boulon de moyeu (6a) et correspondant essentiellement à une distance entre le centre axial (0) et la périphérie la plus extérieure de la bride de fixation de roue (6),
- un évidement essentiellement conique (13) est formé dans une partie d'extrémité latérale extérieure de la roue de moyeu (4), et
- une épaisseur de paroi essentiellement constante est formée entre l'évidement conique (13) et la surface circonférentielle extérieure de la roue de moyeu (4) de sa partie d'extrémité latérale extérieure.

2. Dispositif de palier pour roue de véhicule selon la revendication 1, dans lequel le rayon de courbure (r) de la partie de pointe arrondie (17b) est défini de manière à être plus grand qu'une distance (a) entre le centre axial (0) du boulon de moyeu (6a) et la partie droite (17a), et à être plus petit qu'une distance (b) entre le centre axial (0) du boulon de moyeu (6a) et un point d'intersection de la périphérie la plus extérieure de la bride de fixation de roue (6) et une ligne s'étendant radialement vers l'extérieur à partir de la partie droite (17a), et présente ainsi une relation (a) ≤ (r) < (b).

3. Dispositif de palier pour roue de véhicule selon la revendication 1 ou 2, dans lequel le diamètre extérieur (d) de chaque bille (3) est identique dans les groupes de billes, et le nombre de billes (3) du groupe de billes du côté extérieur est plus important que le nombre de billes (3) du groupe de billes du côté intérieur.

4. Dispositif de palier pour roue de véhicule selon l'une quelconque des revendications 1 à 3, dans lequel un rapport (d)/(PCDi) entre le diamètre extérieur (d) de chaque bille (3) et un diamètre du cercle primitif (PCDi) d'un groupe de billes (3) du côté intérieur est défini comme présentant une plage 0,14 ≤ (d)/(PCDi) ≤ 0,25.
